# EUROPÄISCHE PATENTANMELDUNG

(11) **EP 4 233 515 A1**
(43) Veröffentlichungstag der Anmeldung: **30.08.2023**
(21) Anmeldenummer: 22159218.1
(22) Anmeldetag: 28.02.2022
(51) Int. Cl.: A01D 34/00

(54) **SELBSTFAHRENDES ARBEITSGERÄT**

(71) Anmelder: Andreas Stihl AG & Co. KG, 71336 Waiblingen (DE)
(72) Erfinder: Gerk, Nikolai, 71120 Grafenau (DE); Ullrich, Martin, 70736 Fellbach (DE); Failenschmid, Martin, 72829 Engstingen (DE); Schmidt, Christian, 71409 Schwaikheim (DE); Keller, Sven, 73663 Berglen (DE)
(74) Vertreter: Reinhardt, Annette

(57) **Zusammenfassung**

Ein selbstfahrendes Arbeitsgerät weist ein Chassis (6), mindestens ein Werkzeug und eine Haube (2) auf. Die Haube (2) ist über mindestens eine Lagerung (11) beweglich an dem Chassis (6) gelagert. Die Lagerung (11) ermöglicht eine Relativbewegung der Haube (2) gegenüber dem Chassis (6) in einer in einer Abstellposition (24) vertikalen Richtung (23) und einer horizontalen Richtung (22). Die Lagerung (11) weist eine mit der Haube (2) schwenkbar verbundene Abstützeinheit (32) mit einer ersten Abstützfläche (19) auf, die sich auf einer zweiten Abstützfläche (20) des Chassis abstützt. Eine Bezugsachse (27) der Abstützeinheit (32) verschwenkt bei einer Verschwenkung der Abstützeinheit (32) aus einer Ruhelage (28) in eine maximal gekippte Lage (31) um einen Verschwenkwinkel (a). Zumindest eine der Abstützflächen (19, 20) ist derart konvex ausgebildet, dass die erste Abstützfläche (19) bei einer Verschwenkbewegung der ersten Abstützfläche (19) um eine horizontale Schwenkachse (29, 29a, 29b) zumindest in einem Teilwinkelbereich (β) auf der zweiten Abstützfläche (20) abwälzt.

## Beschreibung

Die Erfindung betrifft ein selbstfahrendes Arbeitsgerät der im Oberbegriff des Anspruchs 1 angegebenen Gattung.

Aus der WO 2018/174777 A1 ist ein selbstfahrendes Arbeitsgerät bekannt, das eine Hochhebeerkennung und Kollisionserkennung aufweist. Hierzu ist eine Haube des Arbeitsgeräts über mehrere Lagerungen in horizontaler und vertikaler Richtung gegenüber einem Chassis des Arbeitsgeräts beweglich gelagert. Jede Lagerung weist ein längliches Abstützteil auf, das mit einem Teller in einem Aufnahmetopf des Chassis liegt. Bei einer Relativbewegung in horizontaler Richtung zwischen Haube und Chassis verkippt dieses Abstützteil, wodurch sich der Teller nur noch mit seinem Umfangsrand am Aufnahmetopf abstützt.

Bei der bekannten Gestaltung ist die Mittellage sehr stabil, so dass für eine erste Auslenkung der Lagerungen bei einer Bewegung der Haube gegenüber dem Chassis in horizontaler Richtung vergleichsweise große Kräfte überwunden werden müssen. Sobald sich der Teller an seinem Umfangsrand abstützt, befindet sich die Lagerung in einer sensitiven Lage, so dass bereits geringe Kräfte vergleichsweise große Auslenkungen bewirken.

Der Erfindung liegt die Aufgabe zugrunde, ein selbstfahrendes Arbeitsgerät der gattungsgemäßen Art zu schaffen, mit dem auf einfache Weise ein günstigerer Kraftverlauf bei der Auslenkung der Haube in horizontaler Richtung erzielbar ist.

Diese Aufgabe wird durch ein selbstfahrendes Arbeitsgerät mit den Merkmalen des Anspruchs 1 gelöst.

Erfindungsgemäß ist vorgesehen, dass zumindest eine der Abstützflächen derart konvex ausgebildet ist, dass die erste Abstützfläche bei einer Verschwenkbewegung der ersten Abstützfläche um eine horizontale Schwenkachse zumindest in einem Teilwinkelbereich auf der zweiten Abstützfläche abwälzt. In dem Teilwinkelbereich befindet sich das Abstützteil in einer sensitiven Lage, so dass eine Verschwenkung mit vergleichsweise geringen Kräften bewirkt werden kann.

Dadurch, dass die erste Abstützfläche zumindest in einem Teilwinkelbereich auf der zweiten Abstützfläche abwälzt, wird die sensitive Lage der Abstützeinheit bereits bei geringer Auslenkung erreicht

Eine einfache Gestaltung ergibt sich, wenn die erste Abstützfläche zumindest in einem Abschnitt konvex ausgebildet ist und die zweite Abstützfläche eben ausgebildet ist. Auch eine konvexe Ausbildung der zweiten Abstützfläche und eine ebene Ausbildung der ersten Abstützfläche können jedoch vorteilhaft sein. Es kann auch vorteilhaft sein, wenn beide Abstützflächen konvex ausgebildet sind.

Dadurch, dass die erste Abstützfläche zumindest in einem Teilwinkelbereich auf der zweiten Abstützfläche abwälzt, ändert sich der Momentanpol und damit der Hebelarm, mit dem Rückstellkräfte wirken. Die Rückstellkräfte können beispielsweise aus dem Eigengewicht und/oder elastischen Elementen, die auf die Abstützeinheit wirken, resultieren. Durch geeignete konvexe Ausbildung zumindest einer der Abstützflächen kann bei ansonsten unveränderter Gestaltung der Lagerung eine Anpassung der Kennlinie der Rückstellkraft erreicht werden. Es lässt sich auf einfache Weise eine progressive Kennlinie der Federkraft erreichen, ohne dass Änderungen an der Feder oder eine spezielle Gestaltung der Feder notwendig wären. Durch geeignete Anpassung der Abstützflächen lassen sich auch andere Kennlinien einstellen, beispielsweise progressive Kennlinien, degressive Kennlinien oder graduierte, also gestufte Kennlinien.

In besonders vorteilhafter Ausführung ist die Abstützeinheit von mindestens einem elastischen Element in die Ruhelage vorgespannt. Das elastische Element ist insbesondere eine Schraubenfeder. Eine besonders vorteilhafte Ausführung ergibt sich, wenn das elastische Element eine konische Schraubenfeder ist. Dadurch wird eine günstige Anordnung ermöglicht.

Der Teilwinkelbereich beträgt vorteilhaft mindestens 20% des Verschwenkwinkels. Besonders bevorzugt beträgt der Teilwinkelbereich mindestens 50%, insbesondere mindestens 80% des Verschwenkwinkels der Abstützeinheit zwischen der Ruhelage und der maximal gekippten Lage. Der Verschwenkwinkel ist dabei in einer Schnittebene durch eine Längsmittelachse der Lagerung zwischen der Mittellage und der maximal gekippten Lage gemessen. Die Schnittebene ist dabei so gewählt, dass die Längsmittelachse sowohl in der Mittellage als auch in der maximal gekippten Lage in der Schnittebene liegt.

Der Hebelarm, mit dem das elastische Element ein Drehmoment auf die Abstützeinheit in Richtung auf die Ruhelage ausübt, ändert sich in dem Bereich, in dem eine Abwälzbewegung der Abstützflächen stattfindet, kontinuierlich. Bei gleichbleibender Rückstellkraft ändert sich dadurch das Drehmoment, das das elastische Element auf die Abstützeinheit in Richtung auf die Ruhelage ausübt. Durch den sich ändernden Hebelarm wird ohne spezielle Gestaltung des elastischen Elements eine progressive Kennlinie der für die Auslenkung benötigten Kraft auf die Haube erreicht. Aufgrund der progressiven Kennlinie werden die Auslenkung und die Rückstellung der Haube als weicher und angenehmer empfunden. Bereits vergleichsweise kleine auf die Haube wirkende Kräfte können eine Auslenkung der Haube bewirken und dadurch eine Erkennung einer Kollision ermöglichen. Aufgrund der progressiven Kennlinie ist eine weitere Auslenkung nur bei erhöhtem Kraftaufwand möglich.

Eine einfache Ausgestaltung ergibt sich, wenn die erste Abstützfläche an einem Teller der Abstützeinheit ausgebildet ist. Vorteilhaft ist die Abstützeinheit in einem Aufnahmetopf der Lagerung angeordnet. Eine einfache und kompakte Gestaltung ergibt sich insbesondere, wenn das elastische Element sich am Aufnahmetopf und am Teller der Abstützeinheit abstützt. Auch eine andere Anordnung des elastischen Elements und/ oder eine andere Anordnung der Abstützeinheit und der Abstützflächen kann jedoch vorteilhaft sein.

Die Endlage der Abstützeinheit wird vorteilhaft von einem Anschlag festgelegt. In besonders vorteilhafter Gestaltung wird der Anschlag von einem Umfangsrand einer Öffnung des Aufnahmetopfs gebildet. Vorteilhaft ragt die Abstützeinheit durch die Öffnung zur Befestigungsstelle der Haube. Auch eine andere Gestaltung kann jedoch vorteilhaft sein.

Um eine Beeinträchtigung der Funktion durch Verschmutzungen oder dergleichen zu verhindern, ist vorteilhaft vorgesehen, dass die Abstützflächen in einem Innenraum angeordnet sind, der gegenüber der Umgebung abgedichtet ist. Vorteilhaft erfolgt die Abdichtung über mindestens ein elastisches Dichtungselement. In besonders vorteilhafter Gestaltung ist das elastische Dichtungselement ein Balg, der einen Innenraum, in dem der Teller der Abstützeinheit angeordnet ist, gegenüber der Umgebung abdichtet.

Vorteilhaft ermöglicht die Lagerung eine Relativbewegung der Haube gegenüber dem Chassis in einer in Abstellposition vertikalen Richtung. Auch die Teile, die die Relativbewegung der Haube gegenüber dem Chassis in vertikaler Richtung in Abstellposition ermöglichen, sind vorteilhaft gegenüber der Umgebung abgedichtet, und bevorzugt in dem Innenraum des Balgs angeordnet. Die Relativbewegung der Haube gegenüber dem Chassis in einer in Abstellposition vertikalen Richtung wird insbesondere genutzt, um ein Hochheben des selbstfahrenden Arbeitsgeräts an der Haube zu erkennen.

Bevorzugt wird die Relativbewegung der Haube gegenüber dem Chassis in einer in Abstellposition vertikalen Richtung von der Abstützeinheit ermöglicht. Die Abstützeinheit umfasst vorteilhaft eine Linearführung. Gegenüber den im Stand der Technik bekannten Teleskopanordnungen hat eine Linearführung den Vorteil, dass die Führungslänge für jede Position der Abstützeinheit gleich groß ist. Dadurch wird eine stabile Führung der Haube gegenüber dem Chassis erreicht und ein Verkanten der Elemente zueinander wird verhindert. Die Linearführung ist vorteilhaft durch ein Führungselement und ein gegenüber dem Führungselement beweglich geführtes Lagerelement gebildet. In bevorzugter Gestaltung ist die erste Abstützfläche mit dem Führungselement verbunden. In besonders bevorzugter Gestaltung ist die erste Abstützfläche an dem Führungselement ausgebildet. Das Lagerelement kann vorteilhaft durch das Führungselement hindurchragen, so dass eine lange Führungslänge bei kompakter Anordnung ermöglicht wird. Das Lagerelement kann durch den Bereich des Führungselements ragen, der die mindestens eine erste Abstützfläche aufweist.

Vorteilhaft sind für die Endlagen des Lagerelements gegenüber dem Führungselement Anschläge vorgesehen. Vorteilhaft ist ein erster Anschlag an dem Führungselement vorgesehen. Es kann vorgesehen sein, dass auch der zweite Anschlag an dem Führungselement ausgebildet ist. In besonders bevorzugter Gestaltung ist der zweite Anschlag an dem Chassis ausgebildet. Der zweite Anschlag legt dabei vorteilhaft die obere Endlage der Haube gegenüber dem Chassis fest. Dadurch wird keine Fixierung des Abstützteils gegenüber dem Chassis in Abstellposition in vertikaler Richtung nach oben benötigt.

Das Lagerelement ist vorteilhaft stabförmig ausgebildet. Vorteilhaft weist das Lagerelement an seinem in Abstellposition unten liegenden Endbereich mindestens einen Gewichtskörper auf, der, wenn sich die Abstützeinheit nicht in ihrer Ruhelage befindet, eine Kraft in Richtung auf die Ruhelage der Abstützeinheit ausübt.

Um definierte Kräfte und definierte Lagen der Elemente zueinander zu erreichen, ist vorteilhaft vorgesehen, dass das Lagerelement und das Führungselement formstabil sind. Das Lagerelement und das Führungselement bestehen vorteilhaft aus formstabilem Kunststoff und/oder aus Metall.

Das Lagerelement ist über eine in Richtung seiner Längsachse gemessene Führungslänge in dem Führungselement geführt. Die Längsachse des Lagerelements ist dabei die Bewegungsachse der Linearführung. Die Führungslänge ist vorteilhaft für jede Relativbewegung von Lagerelement und Führungselement gleich groß. Die Führungslänge entspricht vorteilhaft mindestens dem 2fachen des kleinsten Durchmessers der Linearführung. Bevorzugt ist eine Führungslänge von mindestens dem 3fachen, insbesondere mindestens dem 5fachen des kleinsten Durchmessers der Linearführung.

Vorteilhaft erstreckt sich das Lagerelement auf die in Abstellposition der Abstellfläche zugewandte Unterseite des Chassis. Dadurch kann auf einfache Weise eine vergleichsweise große Länge des Lagerelements und dadurch ein großer Weg zwischen den Endlagen des Lagerelements erreicht werden. Gleichzeitig kann der Bauraum vergleichsweise gering und die Höhe des selbstfahrenden Arbeitsgeräts niedrig gehalten werden.

Vorteilhaft trägt das Lagerelement eine Halterung für die Haube. Das Lagerelement kann hierzu beispielswiese einen Kugelkopf aufweisen, an dem die Halterung gehalten ist.

Um eine gute Erkennung von Kollision und Anheben der Haube zu ermöglichen, und gleichzeitig eine stabile Lagerung der Haube zu ermöglichen, ist vorgesehen, dass mehrere, insbesondere mindestens drei Lagerungen vorgesehen sind. In besonders bevorzugter Gestaltung sind alle Lagerungen gleich aufgebaut. Auch eine unterschiedliche Gestaltung der Lagerungen kann jedoch vorgesehen sein.

Ausführungsbeispiele der Erfindung werden im Folgenden anhand der Zeichnung erläutert. Es zeigen:
- Fig. 1: eine schematische Draufsicht auf ein selbstfahrendes Arbeitsgerät,
- Fig. 2: eine schematische Schnittdarstellung durch das Arbeitsgerät aus Fig. 1
- Fig. 3: eine Schnittdarstellung durch eine Lagerung des Arbeitsgeräts aus Fig. 1,
- Fig. 3a und Fig. 3b: ausschnittsweise Darstellungen der Lagerung aus Fig. 3 in unterschiedlichen Kipplagen der Abstützeinheit,
- Fig. 4: eine Schnittdarstellung durch die Lagerung in der oberen Endlage des Lagerelements gegenüber dem Führungselement.

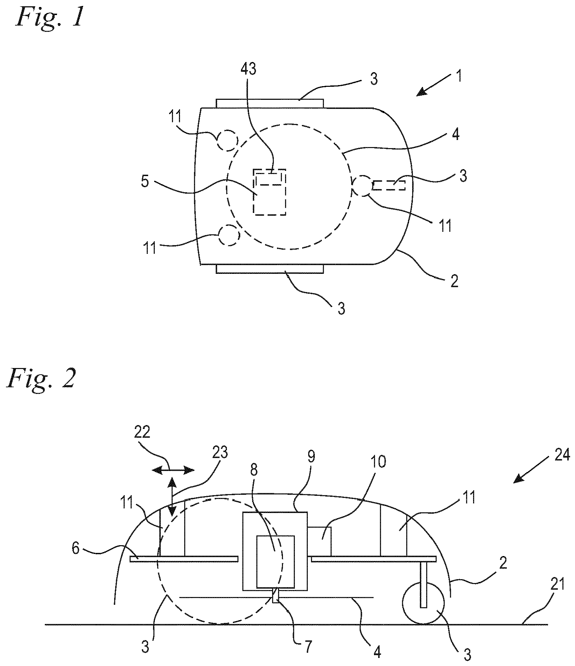

Fig. 1 zeigt schematisch ein selbstfahrendes Arbeitsgerät 1. Im Ausführungsbeispiel ist das selbstfahrende Arbeitsgerät ein Rasenmäher 1, nämlich ein selbstfahrender Rasenmäher. Der Rasenmäher 1 weist ein Chassis 6 auf, das mit Rädern 3 über den Boden fahren kann. Im Ausführungsbeispiel sind zwei hintere, seitliche Räder 3 sowie ein vorderes, mittiges Rad 3 vorgesehen. Die hinteren Räder 3 sind seitlich am Chassis angeordnet und vergleichsweise groß ausgebildet. Das vordere, mittige Rad 3 ist vergleichsweise klein und im Ausführungsbeispiel unter dem Chassis 6 angeordnet. Auch eine andere Anordnung und Anzahl von Rädern 3 kann vorgesehen sein.

Am Chassis 6 ist ein Antriebsmotor 8 angeordnet. Der Antriebsmotor 8 ist im Ausführungsbeispiel in einer Motoraufnahme 9 gehalten. Die Motoraufnahme 9 ist gegenüber dem Chassis 6 über eine Höhenverstelleinrichtung 10 verstellbar angeordnet. Der Antriebsmotor 8 weist eine Antriebswelle 7 auf, an der ein Messer 4 fixiert ist. Durch Änderung der Position der Motoraufnahme 9 mit dem Antriebsmotor 8 kann die Höhe des Messers 4 bezogen auf eine Abstellfläche 21 eingestellt werden. Fig. 2 zeigt den Rasenmäher 1 in einer Abstellposition 24, in der der Rasenmäher 1 auf einer ebenen, horizontalen Abstellfläche 21 steht. Die Höhenverstelleinrichtung 10 ermöglicht in Abstellposition 24 eine Verstellung der Position des Messers 4 in einer vertikalen Richtung 23.

Am Chassis 6 ist eine Haube 2 gelagert. Die Haube 2 ist im Ausführungsbeispiel über drei Lagerungen 11 am Chassis 6 gehalten, wie Fig. 1 zeigt. Auch eine andere Anordnung und Anzahl von Lagerungen 11 kann vorteilhaft sein. Die Lagerungen 11 ermöglichen eine Relativbewegung der Haube 2 in vertikaler Richtung 23 und in einer horizontalen Richtung 22. Die Richtungen 22 und 23 beziehen sich dabei auf die in Fig. 2 dargestellte Abstellposition 24 auf einer ebenen, horizontalen Abstellfläche 21.

Der Rasenmäher 1 weist eine Steuerung 5 auf, die in Fig. 1 schematisch dargestellt ist. Die Steuerung 5 steuert die Bewegung des Rasenmähers 1 über den Boden sowie den Antrieb des Messers 4. Die Steuerung 5 weist vorteilhaft eine Sensoreinheit 43 auf. Im Ausführungsbeispiel umfasst die Sensoreinheit 43 eine Erkennung des Anhebens der Haube 2 sowie eine Erkennung einer Kollision der Haube 2 mit einem Hindernis. Wird die Haube 2 gegenüber dem Chassis 6 angehoben, so führt die Haube 2 eine Relativbewegung in vertikaler Richtung 23 gegenüber dem Chassis 6 aus. Diese Relativbewegung wird durch die Lagerungen 11 ermöglicht. Stößt die Haube 2 gegen ein Hindernis, so führt die Haube 2 eine Relativbewegung gegenüber dem Chassis in horizontaler Richtung 22 aus. Auch diese Relativbewegung wird durch die Lagerungen 11 ermöglicht. Beide Relativbewegungen werden vorteilhaft von der Sensoreinheit 43, die einen Sensor oder mehrere Sensoren umfassen kann, erkannt und zur Ansteuerung des Rasenmähers 1 ausgewertet.

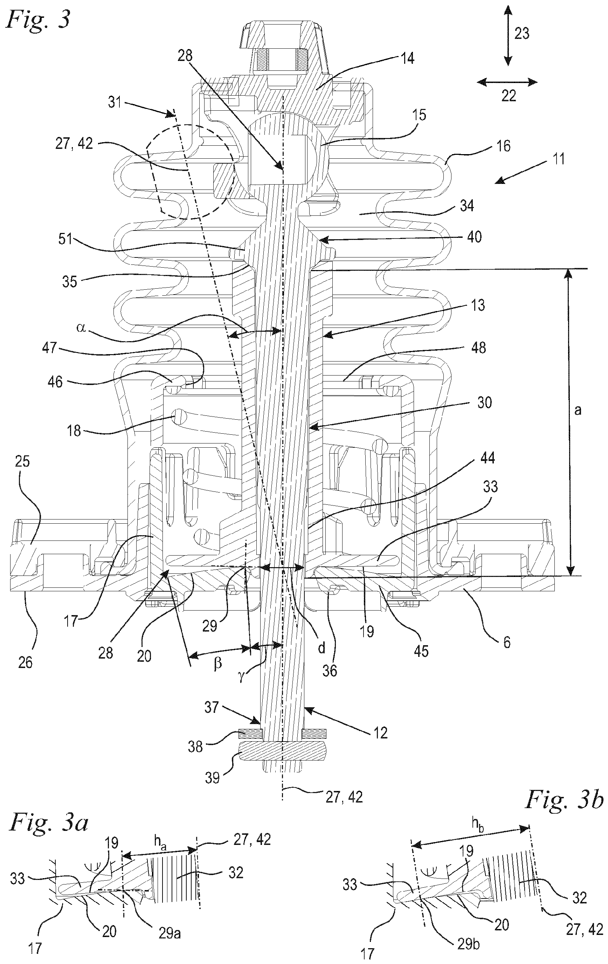

Fig. 3 zeigt eine Lagerung 11 in vergrößerter Schnittdarstellung. Die Lagerung 11 umfasst einen Aufnahmetopf 17, in dem eine Abstützeinheit 32 begrenzt beweglich angeordnet ist. Die Abstützeinheit 32 trägt eine Halterung 14 für die Haube 2. Im Ausführungsbeispiel ist die Halterung 14 an einem Kugelkopf 15 der Abstützeinheit 32 gehalten. Zwischen einer Oberseite 25 des Chassis 6 und der Halterung 14 erstreckt sich ein Dichtungselement 16, im Ausführungsbeispiel ein Faltenbalg. Das Dichtungselement 16 dichtet einen Innenraum 34, in dem die beweglichen Teile der Lagerung 11 angeordnet sind, gegenüber der Umgebung ab. Dadurch sind die zueinander beweglichen Teile der Lagerung 11 vor Umgebungseinflüssen, insbesondere vor Verschmutzungen, geschützt.

Die Abstützeinheit 32 umfasst ein Lagerelement 12 und ein Führungselement 13. Das Lagerelement 12 ist stabförmig ausgebildet. Im Ausführungsbeispiel ragt das Lagerelement 12 durch eine mittige Öffnung 44 des Führungselements 13. Zwischen dem Lagerelement 12 und dem Führungselement 13 ist eine Linearführung 30 ausgebildet. Das Lagerelement 12 weist eine Längsachse 42 auf. Die Linearführung 30 ermöglicht eine Relativbewegung des Lagerelements 12 in Richtung der Längsachse 42 gegenüber dem Führungselement 13. Das Lagerelement ist in Fig. 3 in einer ersten Endlage 40 gegenüber dem Führungselement 13 angeordnet. Die erste Endlage 40 ist von einem ersten Anschlag 35 am Führungselement 13 festgelegt. Der erste Anschlag 35 ist im Ausführungsbeispiel an einer die Öffnung 44 umgebenden Fase ausgebildet. In der ersten Endlage 40 liegt das Lagerelement 12 mit einer Verdickung 51 am ersten Anschlag 35 an. Auch eine andere Anordnung und/oder Ausbildung des ersten Anschlags 35 kann jedoch vorteilhaft sein.

In dem in Fig. 3 dargestellten Ruhezustand, in dem sich die Abstützeinheit 32 in ihrer Ruhelage 28 befindet und das Lagerelement 12 sich gegenüber dem Führungselement 13 in einer ersten Endlage 40 befindet, ist die Längsachse 42 vorteilhaft in vertikaler Richtung 23 ausgerichtet. Die Linearführung 30 ermöglicht eine Bewegung der Haube 2 gegenüber dem Chassis 6 in vertikaler Richtung 23. Das Führungselement 13 ist im Ausführungsbeispiel etwa rohrförmig ausgebildet, wobei an einem Ende des Führungselements 13 ein verbreiterter Teller 33 ausgebildet ist. Auch eine andere Anordnung des Tellers 33 kann vorgesehen sein.

Das Führungselement 13 ist im Aufnahmetopf 17 schwenkbar gelagert. Der Aufnahmetopf 17 weist einen Boden 45 auf, der an seiner in Abstellposition 24 (Fig. 1) oben liegenden Seite eine Abstützfläche 20 bildet. Die Abstützfläche 20 ist eine zweite Abstützfläche, die mit einer ersten Abstützfläche 19 am Führungselement 13 zusammenwirkt, wenn die Abstützeinheit 32 gegenüber dem Aufnahmetopf 17 verschwenkt. Im Ausführungsbeispiel weist das Führungselement 13 den Teller 33 auf, dessen Unterseite die erste Abstützfläche 19 bildet. Beim Verschwenken der Abstützeinheit 32 gegenüber dem Aufnahmetopf 17 wälzt die erste Abstützfläche 19 in einem Teilwinkelbereich β auf der zweiten Abstützfläche 20 ab. Um diese Abwälzbewegung zu ermöglichen, ist die zweite Abstützfläche 20 konvex ausgebildet. Auch eine konvexe Gestaltung der ersten Abstützfläche 19 oder eine konvexe Gestaltung beider Abstützflächen 19, 20 ist möglich.

Fig. 3 zeigt mit strichpunktierter Linie die Lage der Längsachse 42 in einer maximal gekippten Lage 31 der Abstützeinheit 32. In dieser Lage 31 liegt die Abstützeinheit 32 an einem Anschlag an. Der Anschlag wird im Ausführungsbeispiel durch die Innenseite 47 eines Rands 46 des Aufnahmetopfs 17 gebildet. Der Rand 46 umgibt eine Öffnung 48 im Aufnahmetopf, durch die die Abstützeinheit 32 in Richtung auf die Halterung 14 ragt. Zwischen der Ruhelage 28 und der seitlichen Endlage 31 verschwenkt eine Bezugsachse 27 der Abstützeinheit 32 um einen Verschwenkwinkel a. Im Ausführungsbeispiel ist die Bezugsachse 27 die Längsachse 42 des Lagerelements 12. Es kann jedoch auch eine andere Bezugsachse 27 gewählt werden. Die Bezugsachse 27 liegt senkrecht zur Schwenkachse der Abstützeinheit 32. Der Teilwinkelbereich β der Verschwenkung, in dem die beiden Abstützflächen 19 und 20 aufeinander abwälzen, beträgt vorteilhaft mindestens 20% des gesamten Verschwenkwinkels α der Abstützeinheit 32. Der Teilwinkelbereich β beträgt vorteilhaft mindestens 4°.

Wird die Abstützeinheit 32 ausgehend von der Ruhelage 28 in Richtung auf die maximal gekippte Lage 31 verschwenkt, so wird zunächst ein Teilwinkelbereich y überstrichen, bis zu dessen Überschreiten die Abstützeinheit 32 um eine Schwenkachse 29 schwenkt. Im Teilwinkelbereich y wälzen die Abstützflächen 19 und 20 nicht aufeinander ab. Im Teilwinkelbereich y ist der Momentanpol ortsfest. Beim weiteren Verschwenken kommen die Abstützflächen 19 und 20 miteinander in Kontakt und wälzen aufeinander ab. Dadurch ändert sich die Lage der Schwenkachse, also der Momentanpol der Abwälzbewegung, kontinuierlich. Eine Änderung des Momentanpols ergibt sich über den gesamten Teilwinkelbereich β.

Fig. 3a zeigt die Lage der Abstützeinheit 32 bei einer Schwenkachse 29a und Fig. 3b die Lage der Abstützeinheit 32 bei einer Schwenkachse 29b. Die Schwenkachse 29a (Fig. 3a) weist zur Längsachse 42 einen Abstand hₐ auf. Die Schwenkachse 29b (Fig. 3b) weist zur Längsachse 42 einen Abstand h_{b} auf, der deutlich größer ist als der Abstand hₐ. Der Abstand hₐ, h_{b} bestimmt den Hebelarm, mit dem die Rückstellkräfte auf die Abstützeinheit 32 wirken und ein Rückstellmoment in Richtung auf die Ruhelage 28 ausüben. Die Lage der Schwenkachse 29, 29a, 29b bestimmt damit die auf die Abstützeinheit 32 wirkenden Rückstellkräfte.

Im Ausführungsbeispiel ist ein elastisches Element 18 vorgesehen, das die Abstützeinheit 32 in Richtung auf ihre Ruhelage 28 vorspannt. Im Ausführungsbeispiel ist das elastische Element 18 eine Feder, nämlich eine Schraubenfeder. Auch andere elastische Elemente oder eine Kombination mehrerer elastischer Elemente können jedoch vorgesehen sein. Die Schraubenfeder, die das elastische Element 18 bildet, ist im Ausführungsbeispiel eine konische Feder. Die Feder liegt mit dem Ende, das den größeren Außendurchmesser aufweist, an der Innenseite des Rands 46 des Aufnahmetopfs 17 an und mit dem Ende, das den kleineren Außendurchmesser aufweist, an der Oberseite des Tellers 33. Das elastische Element 18 übt auf die Abstützeinheit 32 ein Rückstellmoment in Richtung auf die Ruhelage 28 aus. Die Kraft, die das elastische Element 18 dabei ausübt, ist aufgrund der konstanten Federcharakteristik des elastischen Elements 18 konstant. Das Moment ist daher abhängig vom Hebelarm hₐ, h_{b}, also vom Abstand der Schwenkachse 29, 29a, 29b zur Lage der Längsachse 42 in Ruhelage 28. Dieser Hebelarm vergrößert sich mit größer werdendem Verschwenkwinkel, so dass das Rückstellmoment zunimmt. Bei geringen Auslenkungen ergibt sich damit eine vergleichsweise geringe Rückstellkraft, die mit zunehmender Auslenkung aus der Ruhelage 28 zunimmt.

Wie Fig. 3 zeigt, erstreckt sich der Aufnahmetopf im Wesentlichen auf die Oberseite 25 des Chassis 6. Das Lagerelement 12 ragt in seiner ersten Endlage 40 bis auf eine Unterseite 26 des Chassis 6. Die Oberseite 25 ist dabei in Abstellposition 24 die oben liegende Seite und die Unterseite 26 die in Abstellposition 24 unten liegende Seite des Chassis 6. Das Lagerelement 12 ragt durch eine Durchtrittsöffnung 49 auf die Unterseite 26 des Chassis 6. Dadurch, dass das Lagerelement 12 auf die Unterseite 26 ragt, kann eine große Relativbewegung in vertikaler Richtung 23 bei niedrigem Aufbau erreicht werden. An seinem nach unten ragenden Endbereich 37 trägt das Lagerelement 12 Gewichtskörper. Im Ausführungsbeispiel ist ein erster Gewichtskörper 38 in Form einer Scheibe vorgesehen, der von einem zweiten Gewichtskörper 39 in Form eines Stifts, der durch das Lagerelement 12 ragt, gehalten wird. Auch die Gewichtskörper 38 und 39 bewirken eine Rückstellung der Abstützeinheit 32 in Richtung auf die Ruhelage 28, wenn sich die Abstützeinheit 32 nicht in ihrer Ruhelage 28 befindet.

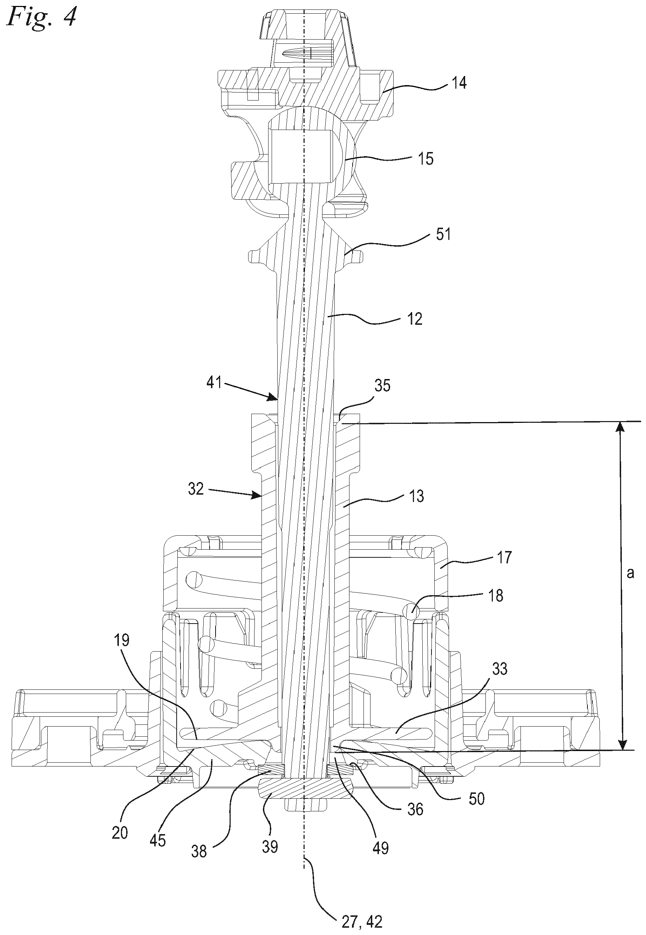

Die Linearführung 30 weist eine Führungslänge a auf. Die Führungslänge a entspricht dem Abstand des obersten und unteren Bereichs des Lagerelements 12, das im Führungselement 13 geführt ist. Bewegt sich das Lagerelement 12 gegenüber dem Führungselement 13, so ändert sich die Führungslänge a hierbei nicht. In der ersten Endlage 40 liegt eine Verdickung 51 (Fig. 3 und Fig. 4) des Lagerelements 12 an einem ersten Anschlag 35 des Führungselements 13 an und begrenzt so die Bewegung des Lagerelements 12 in Abstellposition 24 nach unten.

Fig. 4 zeigt das Lagerelement 12 in einer zweiten Endlage 41. In Fig. 4 ist das Dichtungselement 16 der besseren Übersicht halber nicht dargestellt. In der in Fig. 4 dargestellten zweiten Endlage 41 liegt der Gewichtskörper 38 an einem zweiten Anschlag 36 des Chassis 6 an. Im Ausführungsbeispiel ist der zweite Anschlag 36 an der Unterseite des Aufnahmetopfs 17 des Chassis ausgebildet. Der Anschlag 36 umgibt die Durchtrittsöffnung 49 am Boden 45 des Aufnahmetopfs 17. Von der gegenüberliegenden Seite ragt ein Vorsprung 50 des Führungselements 13 in die Durchtrittsöffnung 49 und zentriert dadurch das Führungselement 13 im Aufnahmetopf 17. Der Vorsprung 50 ist dabei ringförmig und umgibt das Lagerelement 12.

Sowohl die Linearführung 30 als auch die Schwenklagerung, die durch die Abstützflächen 19 und 20 gebildet sind, sind im Innenraum 34 des Dichtungselements 16 angeordnet und dadurch vor Umgebungseinflüssen, insbesondere vor Verschmutzungen, geschützt. Wie Fig. 4 zeigt, ist die Führungslänge a in der hier dargestellten zweiten Endlage 41 genau so groß wie die Führungslänge a in der ersten Endlage 40 (Fig. 3). Die Führungslänge a entspricht vorteilhaft mindestens dem 2fachen des kleinsten Durchmessers d der Linearführung 30. Der Durchmesser d ist in Fig. 3 gezeigt. Im Ausführungsbeispiel befindet sich der kleinste Durchmesser d nahe der Durchtrittsöffnung 49.

## Patentansprüche

1. Selbstfahrendes Arbeitsgerät, insbesondere Rasenmäher (1), mit einem Chassis (6), mit mindestens einem Werkzeug und mit einer Haube (2), die über mindestens eine Lagerung (11) beweglich an dem Chassis (6) gelagert ist, wobei das Arbeitsgerät (1) eine Abstellposition (24) aufweist, in der das Arbeitsgerät (1) auf einer ebenen, horizontalen Abstellfläche (21) steht, wobei die Lagerung (11) eine Relativbewegung der Haube (2) gegenüber dem Chassis (6) in einer in Abstellposition (24) vertikalen Richtung (23) und in mindestens einer in Abstellposition (24) horizontalen Richtung (22) ermöglicht, wobei die Lagerung (11) eine mit der Haube (2) schwenkbar verbundene Abstützeinheit (32) mit einer ersten Abstützfläche (19) aufweist, die sich auf einer zweiten Abstützfläche (20) des Chassis (6) abstützt, wobei eine Bezugsachse (27) der Abstützeinheit (32) bei einer Verschwenkung der Abstützeinheit (32) aus einer Ruhelage (28) in eine maximal gekippte Lage (31) um einen Verschwenkwinkel (a) verschwenkt, **dadurch gekennzeichnet, dass** zumindest eine der Abstützflächen (19, 20) derart konvex ausgebildet ist, dass die erste Abstützfläche (19) bei einer Verschwenkbewegung der ersten Abstützfläche (19) um eine horizontale Schwenkachse (29, 29a, 29b) zumindest in einem Teilwinkelbereich (β) auf der zweiten Abstützfläche (20) abwälzt.

2. Selbstfahrendes Arbeitsgerät nach Anspruch 1,
**dadurch gekennzeichnet, dass** die erste Abstützfläche (19) zumindest in einem Abschnitt konvex ausgebildet ist und dass die zweite Abstützfläche (20) eben ausgebildet ist.

3. Selbstfahrendes Arbeitsgerät nach Anspruch 1 oder 2,
**dadurch gekennzeichnet, dass** die Abstützeinheit (32) von mindestens einem elastischen Element (18) in die Ruhelage (28) vorgespannt ist.

4. Selbstfahrendes Arbeitsgerät nach einem der Ansprüche 1 bis 3,
**dadurch gekennzeichnet, dass** der Teilwinkelbereich (β), in dem die erste Abstützfläche (19) bei einer Verschwenkbewegung der ersten Abstützfläche (19) um eine horizontale Schwenkachse (29, 29a, 29b) auf der zweiten Abstützfläche (20) abwälzt, mindestens 20% des Verschwenkwinkels (a) beträgt.

5. Selbstfahrendes Arbeitsgerät nach Anspruch 3 oder 4,
**dadurch gekennzeichnet, dass** die erste Abstützfläche (19) an einem Teller (33) der Abstützeinheit (32) ausgebildet ist und die Abstützeinheit (32) in einem Aufnahmetopf (17) der Lagerung (11) angeordnet ist, wobei das elastische Element (18) sich am Aufnahmetopf (17) und am Teller (33) der Abstützeinheit (32) abstützt.

6. Selbstfahrendes Arbeitsgerät nach einem der Ansprüche 1 bis 5,
**dadurch gekennzeichnet, dass** die Abstützflächen (19, 20) in einem Innenraum (34) angeordnet sind, der gegenüber der Umgebung abgedichtet ist.

7. Selbstfahrendes Arbeitsgerät nach einem der Ansprüche 1 bis 6,
**dadurch gekennzeichnet, dass** die Lagerung (11) eine Relativbewegung der Haube (2) gegenüber dem Chassis (6) in einer in Abstellposition (24) vertikalen Richtung (23) ermöglicht.

8. Selbstfahrendes Arbeitsgerät nach Anspruch 7,
**dadurch gekennzeichnet, dass** die Abstützeinheit (32) eine Linearführung (30) umfasst, die durch ein Führungselement (13) und ein gegenüber dem Führungselement (13) beweglich geführtes Lagerelement (12) gebildet ist und die Relativbewegung in vertikaler Richtung (23) ermöglicht, und dass die erste Abstützfläche (19) fest mit dem Führungselement (13) verbunden ist.

9. Selbstfahrendes Arbeitsgerät nach Anspruch 8,
**dadurch gekennzeichnet, dass** ein erster Anschlag (35) für eine erste Endlage (40) der Linearführung (30) und ein zweiter Anschlag (36) für eine zweite Endlage (41) der Linearführung (30) vorgesehen ist.

10. Selbstfahrendes Arbeitsgerät nach Anspruch 9,
**dadurch gekennzeichnet, dass** der erste Anschlag (35) am Führungselement (13) ausgebildet ist und dass der zweite Anschlag (36) insbesondere am Chassis (6) ausgebildet ist.

11. Selbstfahrendes Arbeitsgerät nach einem der Ansprüche 8 bis 10,
**dadurch gekennzeichnet, dass** das Lagerelement (12) stabförmig ausgebildet ist und an seinem in Abstellposition (24) unten liegenden Endbereich (37) mindestens einen Gewichtskörper (38, 39) aufweist, der, wenn sich die Abstützeinheit (32) nicht in ihrer Ruhelage (28) befindet, eine Kraft in Richtung auf die Ruhelage (28) ausübt.

12. Selbstfahrendes Arbeitsgerät nach einem der Ansprüche 8 bis 11,
**dadurch gekennzeichnet, dass** das Lagerelement (12) und das Führungselement (13) formstabil sind.

13. Selbstfahrendes Arbeitsgerät nach einem der Ansprüche 8 bis 12,
**dadurch gekennzeichnet, dass** das Lagerelement (12) über eine in Richtung seiner Längsachse (42) gemessene Führungslänge (a) in dem Führungselement (13) geführt ist, wobei die Führungslänge (a) für jede Relativposition von Lagerelement (12) und Führungselement (13) gleich groß ist.

14. Selbstfahrendes Arbeitsgerät nach Anspruch 13,
**dadurch gekennzeichnet, dass** die Führungslänge (a) mindestens dem 2fachen des kleinsten Durchmessers (d) der Linearführung (30) entspricht.

15. Selbstfahrendes Arbeitsgerät nach einem der Ansprüche 8 bis 14,
**dadurch gekennzeichnet, dass** das Lagerelement (12) sich auf die in Abstellposition (24) der Abstellfläche (21) zugewandte Unterseite (26) des Chassis (6) erstreckt.

16. Selbstfahrendes Arbeitsgerät nach einem der Ansprüche 1 bis 15,
**dadurch gekennzeichnet, dass** das Lagerelement (12) eine Halterung (14) für die Haube (2) trägt.
